# EUROPEAN PATENT SPECIFICATION

(11) **EP 1 254 462 B1**
(45) Date of publication and mention of the grant of the patent: **16.06.2004**
(21) Application number: 01900478.7
(22) Date of filing: 05.01.2001
(51) Int. Cl.: G21C 3/28, G21C 7/00

(54) **IMPROVEMENTS IN AND RELATING TO NUCLEAR FUEL ASSEMBLIES**
VERBESSERTE KERNBRENNTSABBÜNDEL
ASSEMBLAGES COMBUSTIBLES NUCLEAIRES AMELIORES

(30) Priority: 07.01.2000 GB 0000241
(43) Date of publication of application: 06.11.2002
(73) Proprietor: British Nuclear Fuels PLC, Warrington, Cheshire WA3 6AS (GB)
(72) Inventor: HESKETH, Kevin W. British Nuclear Fuels Plc, Salwick, Preston Lancashire PR4 0XJ (GB); WORRAL, Andrew British Nuclear Fuels Plc, Salwick, Preston Lancashire PR4 0XJ (GB); CROSSLEY, Stephen British Nuclear Fuels Plc, Salwick, PReston Lancashire PR4 0XJ (GB)
(74) Representative: Pawlyn, Anthony Neil
(86) International application number: PCT/GB2001/000033
(87) International publication number: WO 2001/050477

(56) References cited:
- EP-A- 0 267 846
- EP-A- 0 740 309
- US-A- 4 687 629
- US-A- 5 383 229
- DATABASE WPI Section Ch, Week 198524 Derwent Publications Ltd., London, GB; Class K05, AN 1985-143873 XP002160647 & JP 60 078385 A (GENSHI NENRYO KOGYO KK), 4 May 1985 (1985-05-04)
- DATABASE WPI Section Ch, Week 197843 Derwent Publications Ltd., London, GB; Class K05, AN 1978-77602A XP002160648 & JP 53 109089 A (TOKYO SHIBAURA ELECTRIC CO), 22 September 1978 (1978-09-22)
- PATENT ABSTRACTS OF JAPAN vol. 1998, no. 09, 31 July 1998 (1998-07-31) & JP 10 090460 A (TOSHIBA CORP), 10 April 1998 (1998-04-10)
- PATENT ABSTRACTS OF JAPAN vol. 017, no. 522 (P-1616), 20 September 1993 (1993-09-20) & JP 05 142371 A (HITACHI LTD), 8 June 1993 (1993-06-08)

## Description

This invention concerns improvements in and relating to nuclear fuel assemblies with particular emphasis on assemblies incorporating mixed oxide fuels.

Mixed oxide (MOX) incorporating assemblies are increasingly being used in nuclear reactors, particularly LWR's. The mechanical design of the fuel assemblies for MOX fuels have, however, to date mirrored the mechanical design of fuel assemblies used for UO₂ fuels. This does provide benefits in terms of assembly manufacturing costs and a lack of deviation from regulatory approved systems but brings significant disadvantages which stem from the inherently different natures of the fuels.

MOX assemblies must be carefully designed to avoid power peaking problems at the periphery of the assembly and as a consequence of this techniques have been developed in which different enrichments of the MOX fuel are used in different zones; generally lower enrichments at the edge and still lower enrichments in the corners. These techniques counter problems incorporated in the operation of the fuel assembly, but complicate its manufacture. The most significant element of the cost of a fuel assembly is the cost of the fuel manufacturing process. Different enrichments complicate the production for an assembly and require several days of downtime whilst a production line is cleaned and converted to the new enrichment. JP-05142371-A is an example of one MOX fuel assembly in which the corner rods are of different enrichment to the other rods.

The present invention aims to provide a simpler to construct, cheaper to manufacture fuel assembly which is also operationally superior in the reactor core.

According to a first aspect of the invention we provide a fuel assembly for a nuclear reactor in which the fuel assembly comprises a plurality of fuel rods, at least two different diameters of fuel rod being provided.

It is preferred that two, three or four different diameters of fuel rod be provided, although higher numbers can be used.

Preferably the diameters are equivalent to or less than the normal diameter fuel rod for the assembly type in question.

Preferably the largest diameter fuel rod type, which may be smaller than normal, comprises between 10 and 95% of the fuel rods in the assembly. Preferably the largest size of fuel rods provide between 50 and 90% of the fuel rods in the assembly, and more preferably between 60 and 80% of the fuel rods in the assembly. Ideally, between 65 and 75% of the fuel rods in the assembly are of the largest type. The other fuel rods in the assembly may be of one or more smaller sizes.

The smallest size fuel rod type may comprise between 1 fuel rod and 12% of the fuel rods, or preferably between 0.3 and 8% of the fuel rods, in the assembly. Preferably between 1.4 and 4.2% of the fuel rods in the assembly are of the smallest type.

The fuel assembly may be provided with between 5 and 75% of fuel rods of an intermediate size or sizes. It is preferred that the intermediate size or sizes fuel rods form between 10 and 40% of the fuel rods, and more preferably between 15 and 30% of the fuel rods.

In particularly preferred embodiments the smallest size fuel rod provides between 1 and 3% of the fuel rods, the intermediate size provides between 15 and 30% of the fuel rods and the remaining fuel rods are of the largest size.

In a fuel assembly formed of a 17 x 17 array, it is preferred that between 1 and 12 of the fuel rods are of the smallest type, between 30 and 150 of the fuel rods are of an intermediate type or types, that between 100 and 250 of the fuel rods are of the largest type, the total number of fuel rods being equal to or less than 289, the balance being made up of guide tubes and / or instrument tubes.

In a fuel assembly formed of a 14 x 14 array, it is preferred that between 1 and 12 of the fuel rods are of the smallest type, between 24 and 120 of the fuel rods are of an intermediate type or types, that between 80 and 196 of the fuel rods are of the largest type, the total number of fuel rods being equal to or less than 196, the balance being made up of guide tubes and / or instrument tubes.

In a fuel assembly formed of a 9 x 9 array, it is preferred that between 1 and 8 of the fuel rods are of the smallest type, between 8 and 42 of the fuel rods are of an intermediate type or types, that between 28 and 81 of the fuel rods are of the largest type, the total number of fuel rods being equal to or less than 81, the balance being made up of guide tubes and / or instrument tubes.

In a fuel assembly formed of a 6 x 6 array, it is preferred that between 1 and 4 of the fuel rods are of the smallest type, between 4 and 16 of the fuel rods are of an intermediate type or types, that between 10 and 36 of the fuel rods are of the largest type, the total number of fuel rods being equal to or less than 36, the balance being made up of guide tubes and / or instrument tubes.

The largest size of fuel rods may be 75 to 98% of the diameter of the normal fuel rod diameter, and more preferably between 85 and 93% of the normal diameter.

The smallest size fuel rod may be between 40 and 90% of the diameter of the normal fuel rod diameter, and more preferably between 60 and 85% of the normal diameter and ideally between 75 and 85%.

The intermediate size or sizes may be provided at 70% to 95% of the normal diameter of a fuel rod for that fuel assembly, and more preferably between 80% and 85% of the normal diameter.

The normal pin / rod diameter may be between 1.5 and 0.85cm.

Preferably the smallest size of fuel rods are provided at or adjacent to the periphery of the fuel assembly. It is particularly preferred that the smallest size of fuel rods be provided for the corner rods of a fuel assembly.

Preferably at least 90% of the fuel rods, more than one fuel rod from the peripheral fuel rods of the assembly are of the largest size. Preferably less than 19%, more preferably less than 5% and ideally none of the peripheral fuel rods of the assembly are of the largest size. Up to 25% of the peripheral fuel rods may be provided of the largest size. Preferably at least 90% of the fuel rods adjoining the peripheral rods of the assembly are of the largest size.

Between 0 and 50% of the fuel rods adjoining the peripheral fuel rods may be provided of the intermediate size or sizes. Preferably between 0 and 10% of the fuel rods adjoining the peripheral fuel rods are provided of the intermediate size or sizes. Between 50% and 100% of the fuel rods adjoining the peripheral fuel rods of the assembly may be provided of an intermediate size or sizes.

Preferably between 25% and 100% of the peripheral fuel rods are provided of an intermediate size or sizes. More preferably between 80 and 95% of the peripheral fuel rods are of an intermediate size or sizes. Preferably all the peripheral fuel rods apart from fuel rods at the corners of a fuel assembly are of intermediate size or sizes. Preferably all the peripheral fuel rods are of the smallest or intermediate size or sizes. Intermediate fuel rods may be of one or more intermediate sizes.

Preferably none of the fuel rods, other than potentially peripheral fuel rods or fuel rods adjoining peripheral fuel rods are of the smallest size. Preferably none of the fuel rods adjoining the peripheral fuel rods are of the smallest size. Between 1 fuel rod and 100% of the peripheral fuel rods may be of the smallest size. Preferably between 1 fuel rod and 20% of the peripheral fuel rods are of the smallest size. Preferably the corner fuel rods of a fuel assembly are of the smallest size.

Between 5 and 15% of the fuel rod spaces may be occupied by control rods and / or instrument tubes.

Preferably the fuel is of the mixed oxide type. The plutonium content of the fuel may be between 3 and 20% and most preferably between 6 and 10%. Between 0 and 97% of non-fuel material may be provided to make up a fuel rod. The non fuel material may comprise additives and other materials other than plutonium dioxide and uranium dioxide. Preferably the balance of the fuel rod contents comprise depleted uranium dioxide. Preferably the fuel is homogeneously provided.

Preferably all of the fuel rods containing fuel material contain fuel material of the same type, for instance mixed oxide. Preferably the fuel rods are all provided of substantially the same enrichment, and preferably exactly the same enrichment of plutonium. The radial and / or axial enrichment of the fuel rods and / or their fuel level is preferably the same.

The fuel rods may be provided in a square or hexagonal (VVER) array. The fuel rods may be provided in a series of concentric circles within the fuel assembly bundle.

The fuel assembly may be of the AGR type, CANDU type, hexagonal cross-section type (eg. VVER type), BWR type or PWR type.

References to diameters of fuel rods preferably refer to the external diameter of the fuel rods.

The reactor may be of the AGR type, CANDU type, VVER type, BWR type or PWR type.

In a preferred form, the invention may provide a nuclear reactor core incorporating one or more fuel assemblies according to the first aspect of the invention.

The fuel assemblies incorporated in such a nuclear reactor core may include any of the features, options, possibilities and details set out in the first aspect of the invention and elsewhere in this document.

The core may include mixed oxide fuel assemblies and uranium dioxide fuel assemblies.

In a preferred form, the invention may provide a method of producing a fuel assembly for a nuclear reactor in which a plurality of fuel rods are inserted into the fuel assembly, at least two different diameters of fuel rod being provided.

The fuel assembly and / or fuel rods provided in this method may include the features, options, possibilities and details set out elsewhere in this document.

In a preferred form, the invention may provide a method of loading a nuclear reactor core comprising inserting a new fuel assembly, or refuelling a nuclear reactor core comprising removing a fuel assembly and inserting a new assembly, in which the new fuel assembly is provided according to the first aspect of the invention and/or produced according to the preferred method of the invention.

In a preferred form, the invention may provide a fuel assembly for a nuclear reactor core, and/or a nuclear reactor core incorporating a fuel assembly, in which the fuel assembly has the ratio of the average power of the peak pin in the assembly to the average power of the average pin in the assembly is less than 1.25, with the fuel in the fuel assembly and / or reactor core being provided at a single enrichment.

Preferably the ratio is less than 1.23, more preferably less than 1.22, ideally less than 1.21 and even less than 1.205.

Preferably the fuel assembly includes one or more mixed oxide fueled rods.

The peak pin may be one or all of the corner pins of the fuel assembly.

In a preferred form, the invention may provide a mixed oxide fuel assembly for a nuclear reactor core, and/or a nuclear reactor core incorporating a mixed oxide fuel assembly, in which the mixed oxide fuel assembly, at least in part, has a moderator volume to fuel volume ratio of greater than 2.

Preferably the ratio is greater than 2.1, more preferably greater than 2.5, ideally greater than 3 and even greater than 3.5.

The moderate volume to fuel volume ratio may be greater than 2 for the fuel assembly as a whole. The moderator volume to fuel volume ratio may be greater than 2 for the peripheral fuel rods and / or the peripheral and adjoining fuel rods.

Various embodiments of the invention will now be described, by way of example only, and with reference to the accompanying drawing, in which :-
Figure 1 illustrates in a perspective view a fuel assembly;
Figure 2 illustrates pin powers for an unzoned enrichment MOX assembly;
Figure 3 illustrates pin powers for a zoned enrichment MOX assembly;
Figure 4 schematically illustrates the diametrically zoned MOX assembly of one embodiment of the present invention;
Figure 5 illustrates the variation of lifetime average reactivity value for a UO₂ and for a MOX assembly with varying moderator to fuel volume ratios;
Figure 6 indicates the ration of Pu output / Pu input variation with moderator to fuel volume ratio variation; and
Figure 7 illustrates an alternative diametrically zoned MOX assembly.

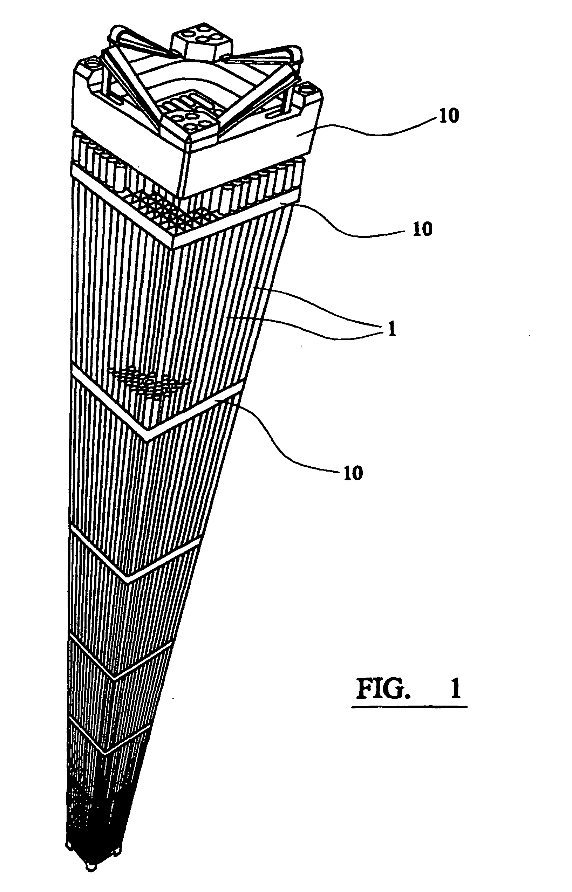

UO₂ fuel assemblies have been very widely used and there is increasing use of MOX fuels in such assemblies. As illustrated in Figure 1 the assemblies originally used for UO₂ and subsequently used for MOX fuels consist of a large number of parallel identical diameter fuel rods 1 held within various support components 10.

The adoption of identical assemblies has attractions in avoiding the need for the production of new fuel rods and fuel assemblies and also in terms of the reduced amount of regulatory scrutiny involved in adapting a proven format as against a brand new format.

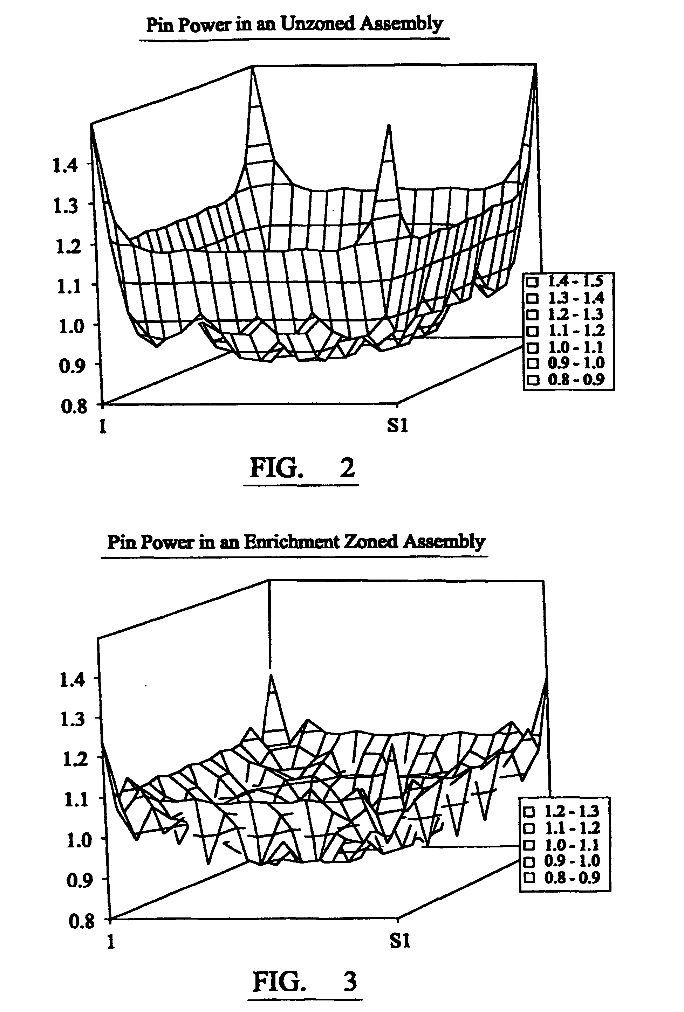

The nature of MOX fuel, however, causes difficulties if a single enrichment is used throughout the fuel assembly. Figure 2 indicates the significant and problematical power peaking which occurs should all the fuel rods be the same. Power peaking is defined as the ratio of the average power of the peak pin within an assembly to the average power of the average pin in that assembly. The type of level seen in Figure 2, 1.5 times, is intolerably high.

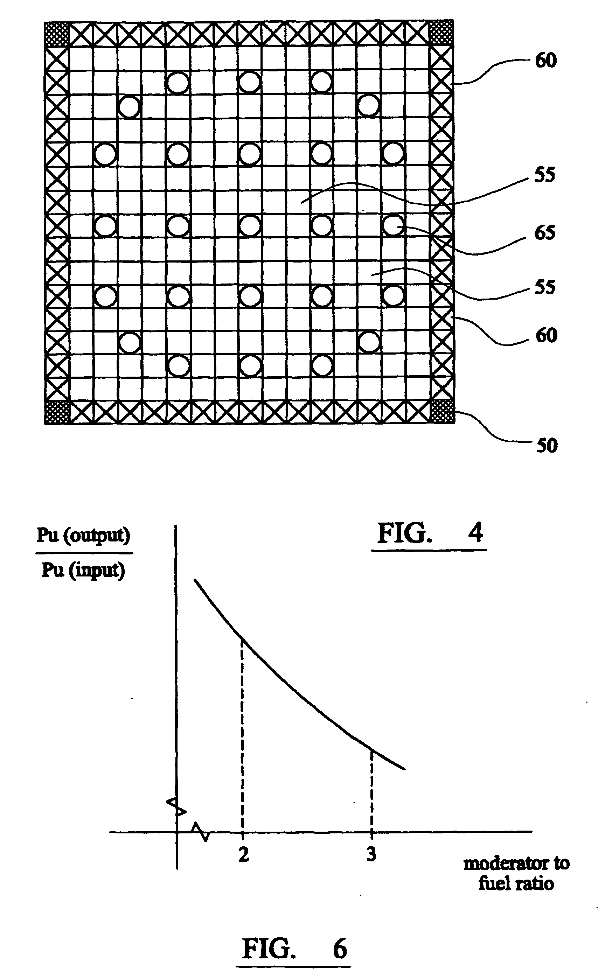

To counter these difficulties a system of different enrichment zones within the assembly of identical diameter fuel rods is used with edge rods having a lower enrichment than core rods and with corner rods having a still lower enrichment. The power peaking benefits obtained with this structure are illustrated in Figure 3. The ratio here has been reduced down to 1.242 times.

Whilst operating problems are overcome to an extent with this type of arrangement the manufacturing problems are significantly increased. A fuel assembly for any given reactor core now necessitates the production of at least three different enrichments of MOX. To achieve this the first enrichment must be run through the plant, the plant shutdown, cleaned and then brought back on line at the second enrichment, with a further repeat to achieve the third enrichment. The shutdown time at each stage is in the order of several days and is a substantial cost as a result.

The present invention addresses this problem by eliminating or reducing the need for different enrichments. The cost benefits of doing so significantly more than cover the cost increases of the more complicated fuel assembly proposed. In addition the fuel assembly, in its modified form, provides large operational benefits in terms of in-reactor fuel performance, energy production and plutonium burning.

The assembly profile according to an illustration of the invention is set out in Figure 4. The assembly employs three different diameter fuel rods, defined relative to a normal value for the fuel assembly type in question of 0.4096cm radius, positioned in certain zones within the overall assembly.

The three diameters are :-
i) 0.9 x normal diameter (clear squares)
ii) 0.825 x normal diameter (cross squares)
iii) 0.8 x normal diameter (dark squares)

The smallest diameter rods are positioned at the corners 50 of the assembly, whereas the larger rods 55 are positioned in the core. The intermediate diameter rods 60 are used for the non-corner periphery. As usual provision is also made for instrument/guide tubes 65.

The arrangement illustrated, when operated at the average MOX level of the Figure 3 scenario, gave a power peak ratio of 1.209; considerably lower than the 1.242 achieved by the zoned enrichment design.

As well as achieving improved power peak ratios the reduction in the effective amount of fuel in the assembly also increases the moderator to fuel ratio within the assembly which makes better use of the plutonium with respect to reactivity.

The normal pin diameter (outside diameter of the fuel rod) relative to which the sizes are considered are the usual sizes for the various fuel assembly types. These include:

| | |
|---|---|
| PWR | 0.8 - 1.5cm |
| BWR | 0.9 - 1.5cm |
| VVER | 0.9 - 1.1cm |
| CANDU | 1.3 - 1.6cm |
| PHWR | 1.52cm |
| AGR | 1.4 - 1.6cm |

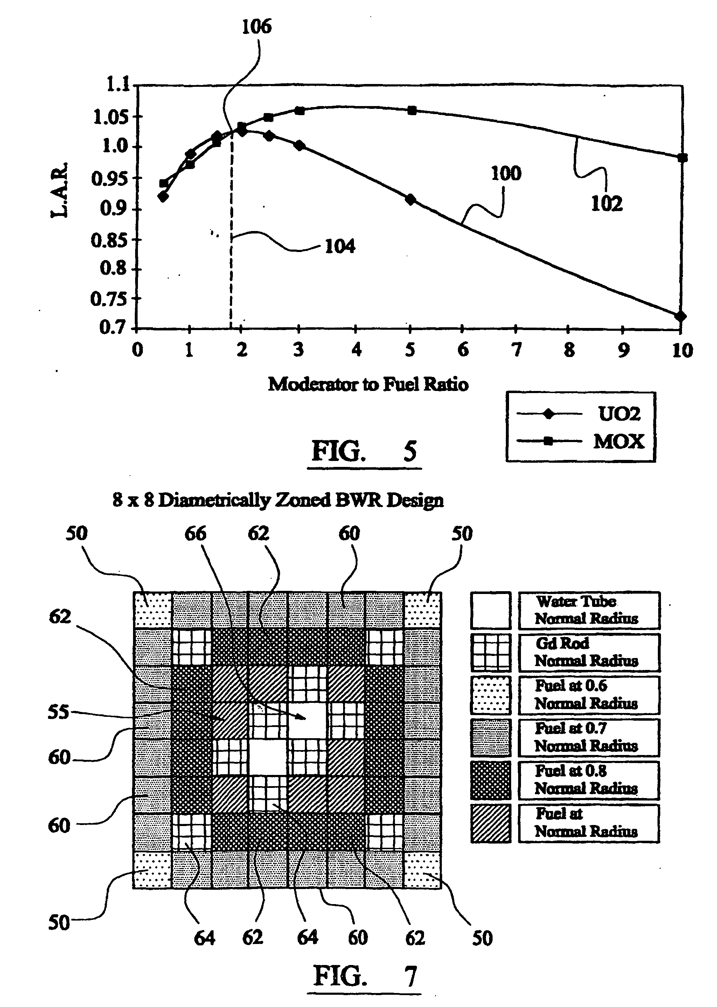

Figure 5 illustrates the variation of lifetime average reactivity with moderator to fuel ratio for a UO₂ assembly, line 100 and for a MOX assembly 102.

Current UO₂ fuel assembly designs are based around a ratio of moderator to fuel, dotted line 104 that is to the left of the peak reactivity. The reasoning for this is that should there be a drastic loss of moderator material from the assembly the variation in the ratio brings the reactivity down the curve, i.e. to the left in the figure, away from the peak value 106.

The effect of this ratio when MOX fuel is placed in mechanically equivalent assemblies is that the LWR is at best the same intersection of dotted line 104 with line 102. This ratio is not ideal for MOX assemblies; reactivity and hence energy output is impaired by the restrictions imposed on the moderator to fuel ratio set by the mechanical arrangement of the rods.

By varying the diameter of the rods the ratio of the moderator volume to fuel volume is increased for the assembly. The result is a shift to the right in Figure 5 and hence a shift up the reactivity curve for the MOX as the level of neutrons is moderated to an extent where the probability of fission of the fissile isotopes increases. A clear benefit arises. A moderator volume to fuel volume of 2.8 can readily be achieved for 17 x 17 PWR assemblies by using the present invention.

Additionally, the volume ratio of moderator to fuel has an effect, due to the effect discussed above in relation to Figure 5, on the rate of consumption of plutonium by the reactor. The variation is illustrated in Figure 6 with the ratio of Pu out/ Pu in being higher (less burns) for a moderator to fuel ratio of 2 than for a moderator to fuel ratio of 3. A ratio of 2 gives approximately 25% plutonium burn in a typical reactor cycle whereas a ratio of 3 gives 40% burn. Increased plutonium consumption is therefore achieved by the present invention. This is a desirable aim, for instance in disposing of decommissioned high enrichment plutonium.

Figure 7 illustrates another variation of the diametric zoning with regard to an 8 x 8 BWR design. The lowest diameter rods 50 are provided at the corner locations, with a first intermediate size of rods 60 at the other locations on the periphery, a second larger size of intermediate sized fuel rods 62 at the non-corner locations of the fuel rods adjacent the peripheral fuel rods and larger size rods 55 in the core. The remaining fuel rod portions are taken up by Gd rods 64 and normal radius water tubes 66. A variety of arrangements within the spirit of the invention can be provided.

Models of the diametrically zoned fuel assemblies with MOX fuel sourced from PWR, AGR and Magnox reactors were compared with model results from an enrichment zoned MOX assembly with the results set out in Table 1:-

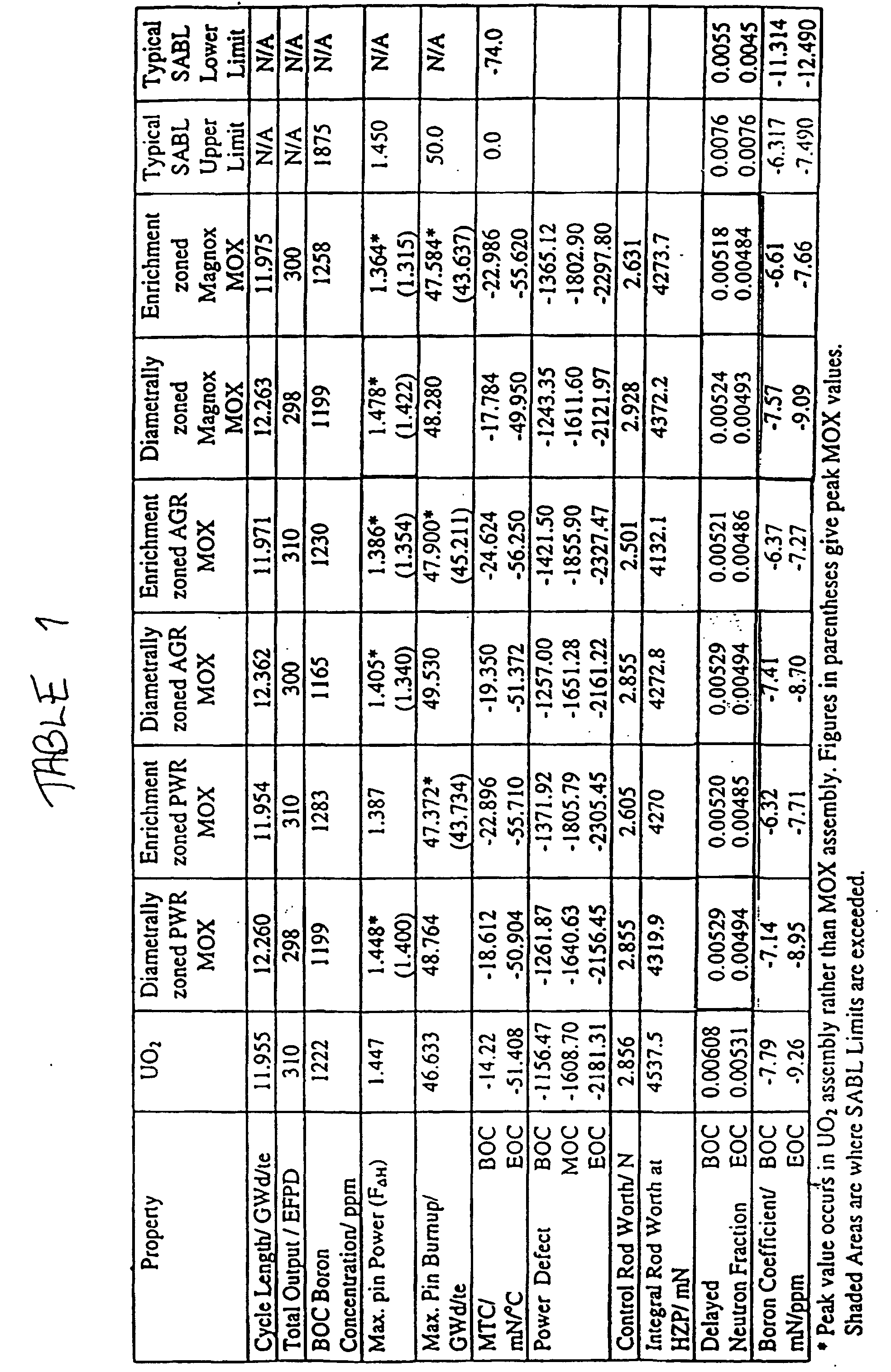

The modelling results indicate that:-
a. the cycle lengths for all the sources of diametrically zoned MOX were greater than for the enrichment zoned MOX;
b. the maximum pin averaged power, F_{ΔH}, was within acceptable levels in all cases;
c. the peak power pin occurred within adjacent UO₂ assemblies, aiding the safety case as a large body of information is available on the operating levels for such assemblies;
d. total control worth in diametrically zoned assemblies is far higher than for enrichment zoned assemblies, so increasing the shut down safety margin to levels equivalent to or even better than for UO₂ assemblies;
e. boron coefficient parameters were met and the required concentrations of boron were lower than for enrichment zoned assemblies; and
f. moderator temperature coefficients were also within acceptable bounds.

## Claims

1. A mixed oxide fuel assembly for a nuclear reactor in which the fuel assembly comprises a plurality of fuel rods, a largest diameter fuel rod type, a smallest diameter fuel rod type, and one or more intermediate size fuel rod types being provided, between 25% and 100% of the peripheral fuel rods being provided of the intermediate size or sizes fuel rod type, the corner rods of the fuel assembly being of the smallest size fuel rod type.

2. A fuel assembly according to claim 1 in which all the smallest size of fuel rods are provided at or adjacent to the periphery of the fuel assembly.

3. A fuel assembly according to claim 1 or claim 2 in which the smallest size of fuel rods has a diameter which is between 60 and 85% of the normal diameter of a fuel rod for the fuel assembly.

4. A fuel assembly according to any preceding claim in which the smallest size fuel rod type comprises between 4 fuel rods and 12% of the fuel rods.

5. A fuel assembly according to any preceding claim in which the fuel assembly is provided with between 5% and 75% of fuel rods of intermediate size or sizes.

6. A fuel assembly according to any preceding claim in which between 80% and 95% of the peripheral fuel rods are provided of intermediate size or sizes.

7. A fuel assembly according to any preceding claim in which all the peripheral fuel rods apart from fuel rods at the corners of a fuel assembly are of intermediate size or sizes.

8. A fuel assembly according to any preceding claim in which between 0 and 50% of the fuel rods adjoining the peripheral fuel rods are provided of the intermediate size or sizes.

9. A fuel assembly according to any preceding claim in which between 50% and 100% of the fuel rods adjoining the peripheral fuel rods are provided of an intermediate size.

10. A fuel assembly according to any preceding claim in which the largest diameter fuel rod type comprises between 10 and 95% of the fuel rods in the assembly.

11. A fuel assembly according to any preceding claim in which at least 50% of the fuel rods, more than one fuel rod from the peripheral fuel rods of the assembly are of the largest size.

12. A fuel assembly according to any preceding claim in which less than 5% of the peripheral fuel rods of the assembly are of the largest size.

13. A fuel assembly according to any preceding claim in which the largest size of fuel rods is 75 to 98% of the diameter of the normal fuel rod diameter for such a fuel assembly.

14. A fuel assembly according to any preceding claim in which the intermediate size or sized fuel rods are between 70 and 95% of the diameter of the normal fuel rod diameter for such a fuel assembly.

15. A fuel assembly according to any preceding claim in which the fuel rods are all provided of substantially the same enrichment of plutonium.

16. A nuclear reactor core incorporating one or more fuel assemblies according to any of claims 1 to 15.

17. A method of producing a fuel assembly for a nuclear reactor in which a plurality of fuel rods are inserted into the fuel assembly, a largest diameter fuel rod type, a smallest diameter fuel rod type, and one or more intermediate size fuel rod types being provided, between 25% and 100% of the peripheral fuel rods being provided of the intermediate size or sizes fuel rod type, the corner rods of the fuel assembly being of the smallest size fuel rod type.

18. A method for configuring fuel assemblies within a nuclear reactor core comprising inserting a new fuel assembly, the new fuel assembly being provided according to any of claims 1 to 15.

## Patentansprüche

1. Mischoxid-Brennstoffanordnung für einen Kernreaktor, in der die Brennstoffanordnung eine Mehrzahl von Brennstoffstäben umfaßt, wobei eine Art von Brennstoffstab mit einem größten Durchmesser, eine Art von Brennstoffstab mit einem kleinsten Durchmesser und eine Größe oder mehrere Arten von Brennstoffstäben mit dazwischen liegender Größe bereitgestellt sind, wobei 25 % bis 100 % der peripheren Brennstoffstäbe von der Art der Brennstoffstäbe mit dazwischen liegender Größe oder dazwischen liegenden Größen bereitgestellt sind, wobei die Eckstäbe der Brennstoffanordnung von der Art des Brennstoffstabs mit kleinster Größe sind.

2. Brennstoffanordnung nach Anspruch 1, in der alle Brennstoffstäbe mit kleinster Größe auf oder benachbart zu der Peripherie der Brennstoffanordnung vorgesehen sind.

3. Brennstoffanordnung nach Anspruch 1 oder Anspruch 2, in der die Brennstoffstäbe mit kleinster Größe einen Durchmesser aufweisen, der zwischen 60 und 85 % des normalen Durchmessers eines Brennstoffstabs für die Brennstoffanordnung liegt.

4. Brennstoffanordnung nach einem vorangehenden Anspruch, in der die Art von Brennstoffstab mit der kleinsten Größe zwischen vier Brennstoffstäben und 12 % der Brennstoffstäbe umfaßt.

5. Brennstoffanordnung nach einem vorangehenden Anspruch, in der die Brennstoffanordnung mit 5 % bis 75 % an Brennstoffstäben mit dazwischen liegender Größe oder dazwischen liegenden Größen ausgestattet ist.

6. Brennstoffanordnung nach einem vorangehenden Anspruch, in der zwischen 80 % und 95 % der peripheren Brennstoffstäbe eine dazwischen liegende Größe oder dazwischen liegende Größen aufweisen.

7. Brennstoffanordnung nach einem vorangehenden Anspruch, in der alle peripheren Brennstoffstäbe außer den Brennstoffstäben an den Ecken einer Brennstoffanordnung eine dazwischen liegende Größe oder dazwischen liegende Größen aufweisen.

8. Brennstoffanordnung nach einem vorangehenden Anspruch, in der 0 bis 50 % der Brennstoffstäbe, die an die peripheren Brennstoffstäbe angrenzen, eine dazwischen liegende Größe oder dazwischen liegende Größen aufweisen.

9. Brennstoffanordnung nach einem vorangehenden Anspruch, in der zwischen 50 % und 100 % der Brennstoffstäbe, die an die peripheren Brennstoffstäbe angrenzen, eine dazwischen liegende Größe aufweisen.

10. Brennstoffanordnung nach einem vorangehenden Anspruch, in der die Art von Brennstoffstab mit größtem Durchmesser 10 bis 95 % der Brennstoffstäbe in der Anordnung umfaßt.

11. Brennstoffanordnung nach einem vorangehenden Anspruch, in der mindestens 50 % der Brennstoffstäbe, die mehr als einen Brennstoffstab von den peripheren Brennstoffstäben der Anordnung entfernt sind, die größte Größe aufweisen.

12. Brennstoffanordnung nach einem vorangehenden Anspruch, in der weniger als 5 % der peripheren Brennstoffstäbe der Anordnung die größte Größe aufweisen.

13. Brennstoffanordnung nach einem vorangehenden Anspruch, in der die größte Größe der Brennstoffstäbe 75 bis 98 % des Durchmessers des normalen Brennstoffstab-Durchmessers bei einer derartigen Brennstoffanordnung beträgt.

14. Brennstoffanordnung nach einem vorangehenden Anspruch, in dem die Brennstoffstäbe mit dazwischen liegender Größe oder dazwischen liegenden Größen 70 bis 95 % des Durchmessers des normalen Brennstoffstab-Durchmessers bei einer derartigen Brennstoffanordnung aufweisen.

15. Brennstoffanordnung nach einem vorangehenden Anspruch, in der die Brennstoffstäbe alle mit im wesentlichen der gleichen Anreicherung an Plutonium versehen sind.

16. Kernreaktor-Kern, enthaltend eine oder mehrere Brennstoffanordnungen nach einem der Ansprüche 1 bis 15.

17. Verfahren zur Herstellung einer Brennstoffanordnung für einen Kernreaktor, bei dem eine Mehrzahl von Brennstoffstäben in die Brennstoffanordnung eingefügt wird, wobei eine Art von Brennstoffstab mit größtem Durchmesser, eine Art von Brennstoffstab mit kleinstem Durchmesser und eine oder mehrere Arten von Brennstoffstäben mit dazwischen liegender Größe bereitgestellt werden, wobei 25 % bis 100 % der peripheren Brennstoffstäbe als Art von Brennstoffstäben mit dazwischen liegender Größe oder dazwischen liegenden Größen bereitgestellt werden, wobei die Eckstäbe der Brennstoffanordnung von der Art von Brennstoffstab mit kleinster Größe sind.

18. Verfahren zur Konfiguration von Brennstoffanordnungen innerhalb eines Kernreaktorkerns, welches das Einfügen einer neuen Brennstoffanordnung umfasst, wobei die neue Brennstoffanordnung nach einem der Ansprüche 1 bis 15 bereitgestellt wird.

## Revendications

1. Assemblage combustible à mélange d'oxydes pour un réacteur nucléaire dans lequel l'assemblage combustible comprend une pluralité de crayons de combustible, un type de crayon de combustible du plus grand diamètre, un type de crayon de combustible du plus petit diamètre, et un ou plusieurs types de crayon de combustible de taille intermédiaire étant fournis, entre 25 % et 100 % des crayons de combustible périphériques étant prévus du type de crayon de combustible de tailles intermédiaires, les crayons de coin de l'assemblage combustible étant du type de crayon de combustible de la plus petite taille.

2. Assemblage combustible selon la revendication 1, dans lequel tous les crayons de combustible de la plus petite taille sont prévus au niveau de ou adjacents à la périphérie de l'assemblage combustible.

3. Assemblage combustible selon la revendication 1 ou la revendication 2 dans lequel la plus petite taille de crayons de combustible présente un diamètre qui est compris entre 60 et 85 % du diamètre normal d'un crayon de combustible pour l'assemblage combustible.

4. Assemblage combustible selon l'une quelconque des revendications précédentes dans lequel le type de crayon de combustible de la plus petite taille comprend entre 4 crayons de combustible et 12 % des crayons de combustible.

5. Assemblage combustible selon l'une quelconque des revendications précédentes, dans lequel l'assemblage combustible est pourvu d'entre 5 % et 75 % de crayons de combustible de tailles intermédiaires.

6. Assemblage combustible selon l'une quelconque des revendications précédentes, dans lequel entre 80 % et 95 % des crayons de combustible périphériques sont prévus de la taille ou des tailles intermédiaires.

7. Assemblage combustible selon l'une quelconque des revendications précédentes, dans lequel tous les crayons de combustible périphériques sauf les crayons de combustible placés aux coins de l'assemblage combustible sont de la taille ou des tailles intermédiaires.

8. Assemblage combustible selon l'une quelconque des revendications précédentes dans lequel entre 0 et 50 % des crayons de combustible attenants aux crayons de combustible périphériques sont prévus de la taille ou des tailles intermédiaires.

9. Assemblage combustible selon l'une quelconque des revendications précédentes, dans lequel entre 50 % et 100 % des crayons de combustible attenants aux crayons de combustible périphériques sont prévus d'une taille intermédiaire.

10. Assemblage combustible selon l'une quelconque des revendications précédentes dans lequel le type de crayon de combustible du plus grand diamètre comprend entre 10 et 95 % des crayons de combustible dans l'assemblage.

11. Assemblage combustible selon l'une quelconque des revendications précédentes, dans lequel au moins 50 % des crayons de combustible, plus d'un crayon de combustible des crayons de combustible périphériques de l'assemblage sont de la plus grande taille.

12. Assemblage combustible selon l'une quelconque des revendications précédentes, dans lequel moins de 5 % des crayons de combustible périphériques de l'assemblage sont de la plus grande taille.

13. Assemblage combustible selon l'une quelconque des revendications précédentes dans lequel la plus grande taille de crayons de combustible est de 75 à 98 % du diamètre normal de crayon de combustible pour un tel assemblage combustible.

14. Assemblage combustible selon l'une quelconque des revendications précédentes dans lequel les crayons de combustible de tailles intermédiaires sont de 70 à 95 % du diamètre normal de crayon de combustible pour un tel assemblage combustible.

15. Assemblage combustible selon l'une quelconque des revendications précédentes, dans lequel les crayons de combustible sont tous pourvus d'un enrichissement de plutonium sensiblement identique.

16. Coeur de réacteur nucléaire incorporant un ou plusieurs assemblages combustibles selon l'une quelconque des revendications 1 à 15.

17. Procédé de fabrication d'un assemblage de combustion pour un réacteur nucléaire dans lequel une pluralité de crayons de combustible est insérée dans l'assemblage combustible, un type de crayon de combustible de plus grand diamètre, un type de crayon de combustible de plus petit diamètre et un ou plusieurs types de crayon de combustible de taille intermédiaire étant fournis, entre 25 % et 100 % des crayons de combustible périphériques étant prévus du type de crayon de combustible de tailles intermédiaires, les crayons de coin de l'assemblage combustible étant du type de crayon de combustible de la plus petite taille.

18. Procédé pour configurer des assemblages de combustion dans un réacteur nucléaire, comprenant l'insertion d'un nouvel assemblage de combustion, ce dernier ayant les caractéristiques prévues aux revendications 1 à 15.
